# EUROPEAN PATENT APPLICATION

(11) **EP 4 729 757 A1**
(43) Date of publication of application: **22.04.2026**
(21) Application number: 24823223.3
(22) Date of filing: 28.05.2024
(51) Int. Cl.: F02C 7/06, F01D 25/16, F02C 3/08, F02C 6/00, F02C 7/32, F16C 23/06, F16C 35/08

(54) **BEARING STRUCTURE FOR GAS TURBINE ENGINE**

(30) Priority: 14.06.2023 JP 2023098125
(71) Applicant: KAWASAKI JUKOGYO KABUSHIKI KAISHA, Kobe-shi, Hyogo 650-8670 (JP)
(72) Inventor: ARAI, Atsunori, Kobe-shi, Hyogo 650-8670 (JP); KATO, Toshihiro, Kobe-shi, Hyogo 650-8670 (JP); OKUWA, Tatsuya, Kobe-shi, Hyogo 650-8670 (JP); NISHIZAWA, Takuma, Kobe-shi, Hyogo 650-8670 (JP)
(74) Representative: Dantz, Jan Henning
(86) International application number: PCT/JP2024/019547
(87) International publication number: WO 2024/257603

(57) **Abstract**

A bearing structure of a gas turbine engine includes: an engine shaft that extends in a forward-backward direction; a compressor, a combustor, and a turbine that are aligned in an axial direction of the engine shaft; and bearings that support the engine shaft. The bearings are located forward of the combustor in the axial direction.

## Description

### Technical Field

The present disclosure relates to a bearing structure of a gas turbine engine.

### Background Art

As disclosed in Patent Literature 1, a gas turbine engine includes a compressor section, a combustion section, a turbine section, and a shaft connecting the compressor section and the turbine section. The shaft is supported by bearings.

### Citation List

### Patent Literature

PTL 1: Japanese Laid-Open Patent Application Publication No. 2017-194055

### Summary of Invention

### Technical Problem

When the gas turbine engine is driven, the engine shaft that connects the compressor and the turbine rotates, causing the internal temperature of the engine to rise. As a result, a load is applied to the bearings that support the engine shaft. At the time, the temperatures of, in particular, the combustion section and the turbine section become high.

In view of the above, an object of one aspect of the present disclosure is to provide a bearing structure of a gas turbine engine, the bearing structure making it possible to reduce a load that is applied to bearings supporting an engine shaft and that is caused by the internal temperature of the engine, and thereby stably support the engine shaft.

### Solution to Problem

A bearing structure of a gas turbine engine according to one aspect of the present disclosure includes: an engine shaft that extends in a forward-backward direction; a compressor, a combustor, and a turbine that are aligned in an axial direction of the engine shaft; and bearings that support the engine shaft. The bearings are located forward of the combustor in the axial direction.

### Advantageous Effects of Invention

One aspect of the present disclosure makes it possible to provide a bearing structure of a gas turbine engine, the bearing structure making it possible to reduce a load that is applied to bearings supporting an engine shaft and that is caused by the internal temperature of the engine, and thereby stably support the engine shaft.

### Brief Description of Drawings

FIG. 1 schematically shows a gas turbine engine according to Embodiment 1.
FIG. 2 is an enlarged view of a bearing structure of a gas turbine engine according to Embodiment 2.

### Description of Embodiments

Hereinafter, embodiments are described with reference to the drawings. In the description below, the term "forward" means the upstream side in a flow direction of air in a gas turbine engine; the term "backward" means the downstream side in the flow direction; the term "radial direction" means a direction orthogonal to the rotational axis of an engine shaft; and the term "axial direction" means the axial direction of the engine shaft.

### (Embodiment 1)

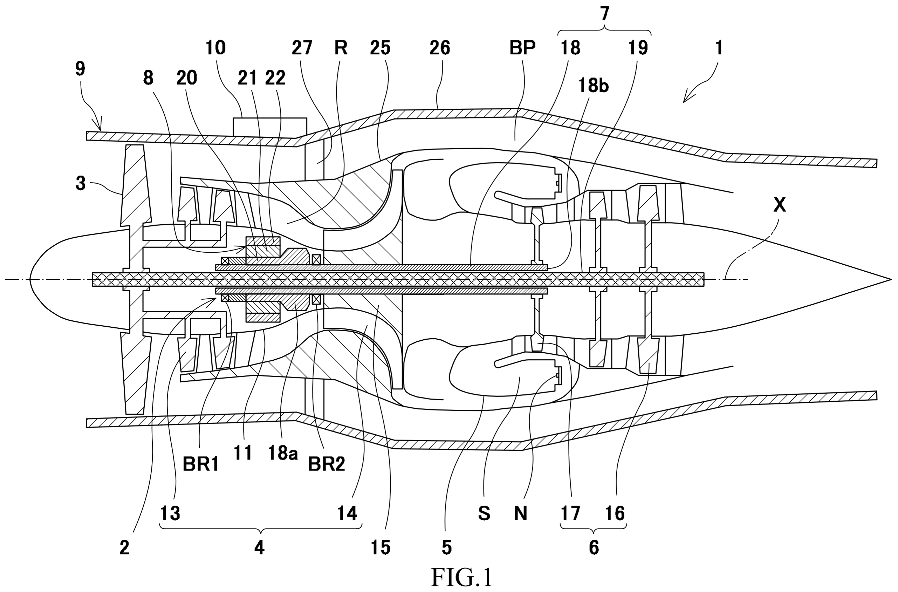

FIG. 1 schematically shows a gas turbine engine 1 (which may be hereinafter simply referred to as "engine 1") according to Embodiment 1. The engine 1 is, as one example, for use in a vehicle, but is not limited thereto. Specifically, the engine 1 is for use in an aircraft. The engine 1 includes a bearing structure 2, which supports an engine shaft 7.

When a gas turbine engine is driven, usually, the engine shaft is driven at a high rotation speed, and the internal temperature of the engine rises. As a result, a load is applied to bearings that are located in the turbine section of the engine and that support the engine shaft. As described below in detail, the bearing structure 2 of the present embodiment includes bearings BR1 and BR2, which support the engine shaft 7. The bearings BR1 and BR2 are located forward of a combustor 5 in the axial direction. Accordingly, the use of the bearings BR1 and BR2 in a harsh environment where the bearings BR1 and BR2 are subjected to high-speed rotation at high temperatures can be avoided in engine 1. Thus, the engine 1 is configured such that the engine shaft 7 can be stably supported by the bearings BR1 and BR2.

As one example, the engine 1 is a two-shaft gas turbine engine. The engine 1 includes: a fan 3; a compressor 4; the combustor 5; a turbine 6; the engine shaft 7 connecting the compressor 4 and the turbine 6; a power generator 8; a casing 9, which accommodates at least the compressor 4 and the combustor 5; at least one piece of electric auxiliary equipment 10; and a cylindrical body 11. The compressor 4, the combustor 5, and the turbine 6 are aligned in the axial direction of the engine shaft 7.

The bearing structure 2 of the engine 1 includes the bearings BR1 and BR2, which rotatably support the engine shaft 7. The bearings BR1 and BR2 are spaced apart from each other in the axial direction. The bearings BR1 and BR2 support the engine shaft 7 at multiple positions. As one example, the bearings BR1 and BR2 of the present embodiment include different types of bearings. As specific examples, the bearings BR1 and BR2 include ball bearings, roller bearings, or a combination of these.

The compressor 4 compresses air fed from the forward side of the engine 1. The combustor 5 combusts fuel and generates combustion gas. The combustor 5 includes: an interior space S, in which the combustion gas is generated; and a nozzle N, which injects the fuel into the interior space S from backward of the interior space S. The combustor 5 of the present embodiment is, as one example, a reverse-flow type in which the interior space S is folded back toward the backward side.

The turbine 6 is supplied with the combustion gas generated by the combustor 5. The engine shaft 7 extends in the forward-backward direction of the engine 1, and is rotated about a predetermined rotational axis X. The engine shaft 7 is rotatably supported. The fan 3 is mechanically connected to the engine shaft 7, and rotates together with the engine shaft 7. The compressor 4, the combustor 5, and the turbine 6 are sequentially located in this order from the forward side to the backward side.

The compressor 4 includes a low-pressure compressor 13 and a high-pressure compressor 14. The high-pressure compressor 14 of the present embodiment is located backward of the low-pressure compressor 13 in the axial direction. As one example, the low-pressure compressor 13 is an axial-flow compressor. Also, as one example, the high-pressure compressor 14 is an axial-flow compressor or a centrifugal compressor. The high-pressure compressor 14 includes an impeller 15, which rotates about the rotational axis X. The turbine 6 is mechanically connected to the engine shaft 7. The turbine 6 includes a low-pressure turbine 16 and a high-pressure turbine 17. The low-pressure turbine 16 is located backward of the high-pressure turbine 17 in the axial direction. Further, as one example, the engine 1 includes the single high-pressure compressor 14.

The engine shaft 7 includes a high-pressure shaft 18 and a low-pressure shaft 19. The high-pressure shaft 18 is a hollow shaft, and connects the high-pressure compressor 14 and the high-pressure turbine 17. The high-pressure shaft 18 includes a diameter-enlarged portion 18a. The diameter-enlarged portion 18a is, in the axial direction, located between the two bearings BR1 and BR2, which are adjacent to each other, and partly expands the external diameter of the high-pressure shaft 18. The diameter-enlarged portion 18a serves to improve the stiffness and mechanical strength of the high-pressure shaft 18 by increasing the thickness of the high-pressure shaft 18 in the radial direction. The bearings BR1 and BR2 support the high-pressure shaft 18. As one example, of the bearings, the maximum external diameter of the high-pressure shaft 18 between the bearings BR1 and BR2, which are adjacent to each other, is greater than the maximum external diameter of the high-pressure shaft 18 behind the bearing BR2, which is the backmost one of the bearings BR1 and BR2. Also, as one example, the maximum external diameter of the high-pressure shaft 18 in a region where the low-pressure compressor 13 is located is greater than the maximum external diameter of the high-pressure shaft 18 in a region that is, in the axial direction, backward of the region where the low-pressure compressor 13 is located. Further, as one example, the maximum external diameter of the high-pressure shaft 18 in the region where the low-pressure compressor 13 is located is the maximum external diameter of the diameter-enlarged portion 18a.

The back end 18b of the high-pressure shaft 18 is located forward of the low-pressure turbine 16 in the axial direction. Also, the back end 18b of the high-pressure shaft 18 is located at a position where the back end 18b overlaps the combustor 5 in the radial direction. As one example, the back end 18b of the high-pressure shaft 18 of the present embodiment is located forward of the injection outlet of the nozzle N in the axial direction.

The low-pressure shaft 19 connects the low-pressure compressor 13 and the low-pressure turbine 16. The low-pressure shaft 19 extends through the high-pressure shaft 18, and is rotated about the rotational axis X. While the engine 1 is being driven, the low-pressure shaft 19 is rotated at a lower speed than the high-pressure shaft 18. The low-pressure turbine 16 is coupled to the fan 3 via the low-pressure shaft 19.

In the engine 1, all the bearings BR1 and BR2 supporting the high-pressure shaft 18 are located forward of the combustor 5 in the axial direction. The bearing BR2, which is the backmost one of the bearings BR1 and BR2, is located forward of the back end of the high-pressure compressor 14 in the axial direction. The bearings BR1 and BR2 of the present embodiment are, as one example, located forward of the impeller 15 of the high-pressure compressor 14 in the axial direction. Also, as one example, the bearings BR1 and BR2 are, in the axial direction, located between the front end of the low-pressure compressor 13 and the back end of the high-pressure compressor 14.

The power generator 8 generates electric power when driven by the rotational driving force of the engine shaft 7. The electric power generated by the power generator 8 drives the electric auxiliary equipment 10. The power generator 8 may have a starter function to drive the rotation of the engine shaft 7, for example, at the start of the engine 1. In this case, the power generator 8 is, in other words, a motor generator.

The power generator 8 is located inside the casing 9. The power generator 8 of the present embodiment is, in the state of being accommodated in the cylindrical body 11, located forward of the high-pressure compressor 14. The power generator 8 includes: a hollow rotating shaft 20 extending in the axial direction; a rotor 21, which rotates integrally with the rotating shaft 20; and a stator 22 located radially outward of the rotor 21. As one example, the rotating shaft 20 and the rotor 21 rotate together with the high-pressure shaft 18.

The power generator 8 is located forward of the combustor 5 in the axial direction. The bearings BR1 and BR2 are located forward and backward of the power generator 8 in the axial direction. The external diameter of a portion of the high-pressure shaft 18, the portion being supported by the bearing BR1 at a position forward of the power generator 8, may be the same as or different from the external diameter of a portion of the high-pressure shaft 18, the portion being supported by the bearing BR2 at a position backward of the power generator 8. In the present embodiment, the maximum external diameter of the high-pressure shaft 18 is greater than the maximum external diameter of the rotating shaft 20. As one example, the maximum external diameter of the high-pressure shaft 18 is the maximum external diameter of the diameter-enlarged portion 18a.

The high-pressure shaft 18 and the rotating shaft 20 are restricted from moving relative to each other in the circumferential direction and the axial direction. In other words, the high-pressure shaft 18 and the rotating shaft 20 are fixed to each other. In the present embodiment, the high-pressure shaft 18 and the rotating shaft 20 are coupled to each other, for example, by at least one of welding, shrinkage fitting, or a fixed spline. The term "fixed spline" herein means a structure in which the high-pressure shaft 18 and the rotating shaft 20 are fixed to each other in such a manner that relative movement between the high-pressure shaft 18 and the rotating shaft 20 via a spline structure is made impossible by the coupling of the high-pressure shaft 18 and the rotating shaft 20 to each other. In a case where the high-pressure shaft 18 and the rotating shaft 20 are shrinkage-fitted to each other, the high-pressure shaft 18 and the rotating shaft 20 include, for example, a coupling portion where they are coupled to each other by curvic coupling.

The casing 9 is a cylindrical body extending in the axial direction of the rotational axis X. The casing 9 of the present embodiment accommodates the engine shaft 7, the fan 3, the compressor 4, the combustor 5, and the turbine 6. As one example, the casing 9 includes an inner shell 25, an outer shell 26, and a strut 27. The inner shell 25 accommodates the compressor 4, the combustor 5, and the turbine 6. In a state where the outer shell 26 is spaced apart from the inner shell 25 radially outward, the outer shell 26 is located concentrically with the inner shell 25. A tubular bypass passage BP is located between the inner shell 25 and the outer shell 26. Part of air sucked in by the fan 3 flows through the bypass passage BP, and is then discharged backward. The electric auxiliary equipment 10 is mounted to the outer peripheral surface of the casing 9. The strut 27 extends in the radial direction, and couples the inner shell 25 and the outer shell 26.

The cylindrical body 11 connects the low-pressure compressor 13 and the high-pressure compressor 14 in the axial direction. The cylindrical body 11 decreases in both external and internal diameters from the forward side to the backward side. The cylindrical body 11 defines part of a compressed air passage R, which extends from the low-pressure compressor 13 toward the high-pressure compressor 14. In the present embodiment, the power generator 8 is located inside the cylindrical body 11.

In the engine 1, the bearing BR2, which is the backmost one of the bearings BR1 and BR2 supporting the engine shaft 7, is located forward of the combustor 5 in the axial direction. In the engine 1 of the present embodiment, all the bearings BR1 and BR2 supporting the high-pressure shaft 18 are located forward of the combustor 5 in the axial direction.

The present embodiment configured as described above makes it possible to reduce a load that is applied to the bearings BR1 and BR2 supporting the engine shaft 7 and that is caused by the internal temperature of the engine 1, and thereby stably support the engine shaft 7.

In order to reduce the size and weight of the gas turbine engine and increase its drive efficiency, it is necessary to increase the compression ratio and combustion temperature of the engine. As a result, it is expected that the temperature of the engine reaches a high temperature and that the engine shaft is driven at a high rotation speed. According to the present embodiment, even in such a case, the load applied to the bearings BR1 and BR2 can be reduced, and thereby the engine shaft 7 can be stably supported.

Further, in the present embodiment, of the bearings supporting the engine shaft 7, all the bearings BR1 and BR2 supporting the high-pressure shaft 18 are located forward of the combustor 5 in the axial direction. This configuration makes it possible to avoid the use of the bearings BR1 and BR2 supporting the high-pressure shaft 18, which rotates at a higher rotation speed than the low-pressure shaft 19, in an environment where the bearings BR1 and BR2 are exposed to high temperatures caused by the combustor 5. This configuration also makes it possible to reduce the number of components of the engine 1, the production cost of the engine 1, and the weight of the engine 1.

### (Embodiment 2)

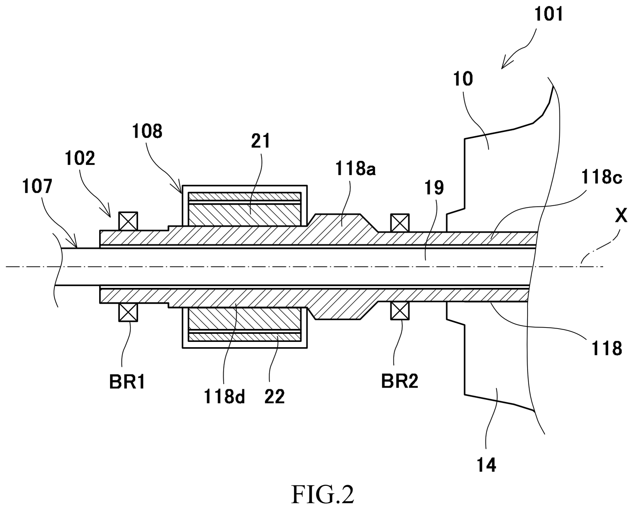

FIG. 2 is an enlarged view of a bearing structure 102 of a gas turbine engine 101 according to Embodiment 2. Hereinafter, Embodiment 2 is described focusing on differences from Embodiment 1. As shown in FIG. 2, the high-pressure shaft 118 of the present embodiment is a single shaft including: a first shaft portion 118c connected to the high-pressure compressor 14; and a second shaft portion 118d received in the rotor 21 of a power generator 108. The bearing structure 102 includes the bearings BR1 and BR2, which are located forward and backward of the power generator 108 in the axial direction. The high-pressure shaft 118 includes a diameter-enlarged portion 118a, which is, in the axial direction, located between the two bearings BR1 and BR2, which are adjacent to each other.

In Embodiment 2, the power generator 108 does not include a hollow rotating shaft extending in the axial direction, and the second shaft portion 118d, which is a portion of the high-pressure shaft 118, substantially functions as the rotating shaft of the power generator 108. Further, the high-pressure shaft 118 is configured as a single shaft including the first shaft portion 118c and the second shaft portion 118d. Accordingly, compared to configuring the first shaft portion 118c and the second shaft portion 118d individually, the first shaft portion 118c and the second shaft portion 118d can be integrally configured. Consequently, the high-pressure shaft 118 can be stably supported by the bearings BR1 and BR2 of the bearing structure 102 while suppressing vibration of the high-pressure shaft 118 during the rotation thereof. In addition, the number of components of the engine 101 can be reduced.

The low-pressure compressor 13, the high-pressure compressor 14, and the combustor 5 are not limited to the configurations described in the above embodiments. Each of the engine 1 and the engine 101 may be for use in an unmanned aerial vehicle. Each of the engine 1 and the engine 101 may be used for non-vehicle applications. The bearings included in each of the bearing structures 2 and 102 are not limited to a particular type. The bearings may include three or more bearings.

In cases where the engine shaft 7 or 107 includes the low-pressure shaft 19, the bearings may include at least one bearing that supports the low-pressure shaft 19. For example, the at least one bearing may include: a bearing that is, in the axial direction, located forward of the bearing BR1, which is the frontmost one of the bearings BR1 and BR2 supporting the high-pressure shaft 18; and a bearing that is, in the axial direction, located backward of the bearing BR2, which is the backmost one of the bearings BR1 and BR2.

### (Disclosure Items)

The following items each disclose a preferred embodiment.

### [Item 1]

A bearing structure of a gas turbine engine, the bearing structure including: an engine shaft that extends in a forward-backward direction; a compressor, a combustor, and a turbine that are aligned in an axial direction of the engine shaft; and bearings that support the engine shaft, wherein the bearings are located forward of the combustor in the axial direction.

The above configuration makes it possible to avoid the use of the bearings supporting the engine shaft in a harsh environment where the bearings are subjected to high-speed rotation at high temperatures caused by the combustor. Accordingly, a load that is applied to the bearings supporting the engine shaft and that is caused by the internal temperature of the gas turbine engine can be reduced, which makes it possible to provide the bearing structure of the gas turbine engine, the bearing structure being capable of stably supporting the engine shaft.

### [Item 2]

The bearing structure of a gas turbine engine according to item 1, wherein: the compressor includes a high-pressure compressor and a low-pressure compressor, the low-pressure compressor being located forward of the high-pressure compressor in the axial direction; the turbine includes a high-pressure turbine and a low-pressure turbine, the low-pressure turbine being located backward of the high-pressure turbine in the axial direction; the engine shaft includes a hollow high-pressure shaft and a low-pressure shaft, the hollow high-pressure shaft connecting the high-pressure compressor and the high-pressure turbine, the low-pressure shaft extending through the high-pressure shaft and connecting the low-pressure compressor and the low-pressure turbine; and the bearings are positioned to support the high-pressure shaft.

The above configuration makes it possible to avoid the use of the bearings supporting the high-pressure shaft in a harsh environment where the bearings are subjected to high-speed rotation together with the high-pressure shaft at high temperatures caused by the combustor. Accordingly, a load that is applied to the bearings supporting the high-pressure shaft and that is caused by the internal temperature of the gas turbine engine can be reduced.

### [Item 3]

The bearing structure of a gas turbine engine according to item 2, wherein the high-pressure compressor is an axial-flow compressor or a centrifugal compressor.

According to the above configuration, the high-pressure compressor used therein is an axial-flow compressor or a centrifugal compressor. Therefore, for example, even in a case where the gas turbine engine is made compact, the engine can be driven with high efficiency by using the high-pressure compressor. Further, a load that is applied to the bearings supporting the high-pressure shaft and that is caused by the internal temperature of the gas turbine engine can be reduced.

### [Item 4]

The bearing structure of a gas turbine engine according to any one of items 2 to 3, wherein of the bearings, a maximum external diameter of the high-pressure shaft between the bearings that are adjacent to each other is greater than a maximum external diameter of the high-pressure shaft behind a backmost one of the bearings.

According to the above configuration, of the bearings, the stiffness and mechanical strength of a part of the high-pressure shaft between the bearings that are adjacent to each other can be improved. Accordingly, when driving the rotation of the high-pressure shaft while supporting the high-pressure shaft with the bearings, unnecessary vibration of the high-pressure shaft can be suppressed, which makes it possible to stably support the high-pressure shaft. Further, a load that is applied to the bearings supporting the high-pressure shaft and that is caused by the internal temperature of the gas turbine engine can be reduced.

### [Item 5]

The bearing structure of a gas turbine engine according to any one of items 2 to 4, wherein a maximum external diameter of the high-pressure shaft in a region where the low-pressure compressor is located is greater than a maximum external diameter of the high-pressure shaft in a region that is, in the axial direction, backward of the region where the low-pressure compressor is located.

According to the above configuration, in the region of the high-pressure shaft where the low-pressure compressor is located, the rigidity and mechanical strength of the high-pressure shaft can be improved. Therefore, forward of the high-pressure compressor in the axial direction, vibration of the high-pressure shaft during its rotation can be suppressed. Accordingly, the high-pressure shaft can be readily supported in a stable manner by the bearings that are located forward of the combustor in the axial direction. Further, a load that is applied to the bearings supporting the high-pressure shaft and that is caused by the internal temperature of the gas turbine engine can be reduced.

### [Item 6]

The bearing structure of a gas turbine engine according to any one of items 2 to 5, wherein: the high-pressure compressor includes an impeller that rotates about a rotational axis of the engine shaft; and the bearings are located forward of the impeller in the axial direction.

The above configuration makes it possible to avoid the use of the bearings supporting the high-pressure shaft in a harsh environment where the bearing are subjected to high-speed rotation at high temperatures occurring at a position backward of the front end of the impeller of the high-pressure compressor. Therefore, the high-pressure shaft can be stably supported by the bearings.

### [Item 7]

The bearing structure of a gas turbine engine according to any one of items 2 to 6, wherein the bearings are, in the axial direction, located between a front end of the low-pressure compressor and the high-pressure compressor.

The above configuration makes it possible to avoid the use of the bearings supporting the high-pressure shaft in a harsh environment where the bearings are subjected to high-speed rotation at high temperatures occurring at a position backward of the front end of the high-pressure compressor. Further, efficient arrangement of the bearings is enabled by utilizing the space between the low-pressure compressor and the high-pressure compressor in the axial direction.

### [Item 8]

The bearing structure of a gas turbine engine according to any one of items 2 to 7, further including a power generator including a hollow rotating shaft that extends in the axial direction and a rotor that rotates integrally with the rotating shaft, the power generator being located forward of the combustor in the axial direction, wherein the bearings are located forward and backward of the power generator in the axial direction.

According to the above-described configuration, the arrangement of the bearings supporting the high-pressure shaft can be readily achieved by utilizing the spaces that are located forward and backward of the power generator in the axial direction. Further, for example, the rotating shaft of the power generator can be stably supported by the bearings.

### [Item 9]

The bearing structure of a gas turbine engine according to item 8, wherein: the rotating shaft and the rotor rotate together with the high-pressure shaft; and the high-pressure shaft and the rotating shaft are restricted from moving relative to each other in a circumferential direction and the axial direction.

According to the above configuration, while the engine is being driven, the rotating shaft and the high-pressure shaft are restricted from moving relative to each other, which makes it possible to stably support the high-pressure shaft with the bearings when the rotor of the power generator rotates together with the high-pressure shaft.

### [Item 10]

The bearing structure of a gas turbine engine according to item 9, wherein the high-pressure shaft and the rotating shaft are coupled to each other by at least one of welding, shrinkage fitting, or a fixed spline.

According to the above configuration, by securely coupling the high-pressure shaft and the rotating shaft, the high-pressure shaft and the rotating shaft can be integrally configured. Consequently, vibration of the high-pressure shaft and the rotating shaft during their rotation can be suppressed, and the high-pressure shaft can be stably supported by the bearings.

### [Item 11]

The bearing structure of a gas turbine engine according to any one of items 2 to 7, further comprising a power generator including a hollow rotor that rotates integrally with the high-pressure shaft, the power generator being located forward of the combustor in the axial direction, wherein the high-pressure shaft is a single shaft including: a first shaft portion connected to the high-pressure compressor; and a second shaft portion received in the rotor.

The above configuration allows the second shaft portion of the high-pressure shaft, which is received in the rotor of the power generator, to substantially function as the rotating shaft of the power generator. Further, the high-pressure shaft is configured as a single shaft including the first shaft portion and the second shaft portion. Accordingly, compared to configuring the first shaft portion and the second shaft portion individually, the first shaft portion and the second shaft portion can be integrally configured. Therefore, the high-pressure shaft can be stably supported by the bearings. In addition, the number of components of the gas turbine engine can be reduced.

### [Item 12]

The bearing structure of a gas turbine engine according to any one of items 2 to 10, further comprising a power generator including a hollow rotating shaft that extends in the axial direction and a rotor that rotates integrally with the rotating shaft, the power generator being located forward of the combustor in the axial direction, wherein a maximum external diameter of the high-pressure shaft is greater than a maximum external diameter of the rotating shaft.

According to the above configuration, the maximum external diameter of the high-pressure shaft is greater than the maximum external diameter of the rotating shaft. This makes it possible to improve the stiffness and mechanical strength of the high-pressure shaft. Consequently, vibration of the high-pressure shaft during its rotation can be suppressed, and the high-pressure shaft can be stably supported by the bearings.

### [Item 13]

The bearing structure of a gas turbine engine according to any one of items 2 to 12, wherein a back end of the high-pressure shaft is located forward of the low-pressure turbine in the axial direction.

The above configuration, in which the back end of the high-pressure shaft is located forward of the low-pressure turbine in the axial direction, makes it possible to shorten the high-pressure shaft. Consequently, vibration of the high-pressure shaft during its high-speed rotation can be suppressed. Further, a situation where the bearings supporting the high-pressure shaft are heated via the high-pressure shaft by high-temperature heat generated as a result of the driving of the low-pressure turbine can be avoided.

### Reference Signs List

- X BR1, BR2: bearing rotational axis
- 1, 101: gas turbine engine
- 2, 102: bearing structure of the gas turbine engine
- 2: power generator
- 4: compressor
- 5: combustor
- 6: turbine
- 7: engine shaft
- 8: power generator
- 13: low-pressure compressor
- 14: high-pressure compressor
- 15: impeller
- 16: low-pressure turbine
- 17: high-pressure turbine
- 18, 118: high-pressure shaft
- 18b: back end of the high-pressure shaft
- 19: low-pressure shaft
- 20: rotating shaft
- 21: rotor
- 118c: first shaft portion
- 118d: second shaft portion

## Claims

1. A bearing structure of a gas turbine engine, the bearing structure comprising:
an engine shaft that extends in a forward-backward direction;
a compressor, a combustor, and a turbine that are aligned in an axial direction of the engine shaft; and
bearings that support the engine shaft, wherein
the bearings are located forward of the combustor in the axial direction.

2. The bearing structure of a gas turbine engine according to claim 1, wherein:
the compressor includes a high-pressure compressor and a low-pressure compressor, the low-pressure compressor being located forward of the high-pressure compressor in the axial direction;
the turbine includes a high-pressure turbine and a low-pressure turbine, the low-pressure turbine being located backward of the high-pressure turbine in the axial direction;
the engine shaft includes a hollow high-pressure shaft and a low-pressure shaft, the hollow high-pressure shaft connecting the high-pressure compressor and the high-pressure turbine, the low-pressure shaft extending through the high-pressure shaft and connecting the low-pressure compressor and the low-pressure turbine; and
the bearings are positioned to support the high-pressure shaft.

3. The bearing structure of a gas turbine engine according to claim 2, wherein
the high-pressure compressor is an axial-flow compressor or a centrifugal compressor.

4. The bearing structure of a gas turbine engine according to any one of claims 2 to 3, wherein
of the bearings, a maximum external diameter of the high-pressure shaft between the bearings that are adjacent to each other is greater than a maximum external diameter of the high-pressure shaft behind a backmost one of the bearings.

5. The bearing structure of a gas turbine engine according to any one of claims 2 to 4, wherein
a maximum external diameter of the high-pressure shaft in a region where the low-pressure compressor is located is greater than a maximum external diameter of the high-pressure shaft in a region that is, in the axial direction, backward of the region where the low-pressure compressor is located.

6. The bearing structure of a gas turbine engine according to any one of claims 2 to 5, wherein:
the high-pressure compressor includes an impeller that rotates about a rotational axis of the engine shaft; and
the bearings are located forward of the impeller in the axial direction.

7. The bearing structure of a gas turbine engine according to any one of claims 2 to 6, wherein
the bearings are, in the axial direction, located between a front end of the low-pressure compressor and the high-pressure compressor.

8. The bearing structure of a gas turbine engine according to any one of claims 2 to 7, further comprising a power generator including a hollow rotating shaft that extends in the axial direction and a rotor that rotates integrally with the rotating shaft, the power generator being located forward of the combustor in the axial direction, wherein
the bearings are located forward and backward of the power generator in the axial direction.

9. The bearing structure of a gas turbine engine according to claim 8, wherein:
the rotating shaft and the rotor of the power generator rotate together with the high-pressure shaft; and
the high-pressure shaft and the rotating shaft are restricted from moving relative to each other in a circumferential direction and the axial direction.

10. The bearing structure of a gas turbine engine according to claim 9, wherein
the high-pressure shaft and the rotating shaft are coupled to each other by at least one of welding, shrinkage fitting, or a fixed spline.

11. The bearing structure of a gas turbine engine according to any one of claims 2 to 7, further comprising a power generator including a hollow rotor that rotates integrally with the high-pressure shaft, the power generator being located forward of the combustor in the axial direction, wherein
the high-pressure shaft is a single shaft including: a first shaft portion connected to the high-pressure compressor; and a second shaft portion received in the rotor.

12. The bearing structure of a gas turbine engine according to any one of claims 2 to 10, further comprising a power generator including a hollow rotating shaft that extends in the axial direction and a rotor that rotates integrally with the rotating shaft, the power generator being located forward of the combustor in the axial direction, wherein
a maximum external diameter of the high-pressure shaft is greater than a maximum external diameter of the rotating shaft.

13. The bearing structure of a gas turbine engine according to any one of claims 2 to 12, wherein
a back end of the high-pressure shaft is located forward of the low-pressure turbine in the axial direction.
